# EUROPEAN PATENT APPLICATION

(11) **EP 4 825 508 A1**
(43) Date of publication of application: **21.10.2026**
(21) Application number: 24903430.7
(22) Date of filing: 14.11.2024
(51) Int. Cl.: B22F 1/00, B22F 1/12, B22F 1/16, B22F 1/052, C22C 1/04

(54) **POWDER FOR SINTERING**

(30) Priority: 14.12.2023 JP 2023211202
(71) Applicant: Mitsubishi Materials Corporation, Tokyo 100-8117 (JP); National Institute of Advanced Industrial Science and Technology, Chiyoda-ku Tokyo 100-8921 (JP)
(72) Inventor: KOBAYASHI Keigo, Saitama-shi, Saitama 330-8508 (JP); KATO Jun, Saitama-shi, Saitama 330-8508 (JP); HIRAYAMA Yusuke, Tsukuba-shi, Ibaraki 305-8560 (JP); LIU Zheng, Tsukuba-shi, Ibaraki 305-8560 (JP); TAKAGI Kenta, Tsukuba-shi, Ibaraki 305-8560 (JP)
(74) Representative: Hoffmann Eitle
(86) International application number: PCT/JP2024/040476
(87) International publication number: WO 2025/126770

(57) **Abstract**

This powder for sintering contains a main powder composed of aluminum or an aluminum alloy and an oxide of one or more rare earth metal elements selected from scandium, yttrium, and lanthanoid elements. This powder for sintering (1) is composed of a mixed powder having a particle (2) of a main powder composed of aluminum or an aluminum alloy and an additive particle (3) composed of an oxide of one or more rare earth metal elements selected from scandium, yttrium, and lanthanoid elements, and at least a part of the additive particle (3) may adhere to a surface of the particle of the main powder (2).

## Description

### TECHNICAL FIELD

The present invention relates to a powder for sintering having excellent sinterability.

Priority is claimed on Japanese Patent Application No. 2023-211202, filed December 14, 2023, the content of which is incorporated herein by reference.

### BACKGROUND ART

Aluminum is lightweight, has favorable electrical conductivity and thermal conductivity, and is thus used for heat sinks or the like in devices, but is a metallic material having significant process constraints since the inside is protected by a dense and strong oxide film that is formed on the surface.

Conventionally, for cast materials and the like, a method in which members are joined together by breaking oxide films on the surfaces using a flux (brazing filler metal) and a desired shape is imparted has been in use.

Meanwhile, such a method has a problem in that it is difficult to obtain sufficient accuracy and spatial resolution in heat exchange materials for which a complex and precise shape control is required, such as a pin fin lattice shape.

In contrast, in a powder sintering method, production of a so-called near net shape is possible, and technical development as means for achieving a complex shape at a low cost is being expected.

Even in powder sintering, aluminum still has a significant constraint of a difficulty in sintering due to the formation of an oxide film, and in powder sintering, due to a scale constraint, a difficulty in breaking an oxide film by a flux and densification of a structure have been considered as problems.

In the powder sintering method, there is also means for enhancing the packability of a powder by pressurizing a powder compact and advantageously proceeding with sintering, which is represented by hot pressing. However, in an additive manufacturing process that is attracting attention as a method for imparting a complex shape with a high accuracy, in principle, there is a problem in that it is difficult to apply a method such as pressurization.

In such methods, it is also an important development element to enhance the flowability of a powder and improve the packability during natural deposition.

For this purpose, addition of the nanoparticles of an oxide or the like to a powder and interposing of the nanoparticles between powder particles have been performed. For example, techniques of coating the surfaces of powder particles with oxide nanoparticles by adding the oxide nanoparticles of silica, alumina, or the like to a powder of a titanium alloy, a nickel alloy, or the like are known (refer to Patent Documents 1, 2, and 3).

In addition, a technique of improving the flowability of a powder by precipitating a nanostructure on the surfaces of powder particles by a thermal plasma treatment and reducing the contact area between the powder particles is known (refer to Patent Document 2).

### CITATION LIST

### Patent Document

Patent Document 1: Japanese Unexamined Patent Application, First Publication No. 2016-041850
Patent Document 2: Japanese Unexamined Patent Application, First Publication No. 2019-112699
Patent Document 3: Japanese Unexamined Patent Application, First Publication No. 2021-075784
Patent Document 4: United States Patent Application, Publication No. 2020/0399744
Patent Document 5: Chinese Patent Application, Publication No. 111230098
Patent Document 6: Japanese Unexamined Patent Application, First Publication No. 2021-134428
Patent Document 7: Japanese Unexamined Patent Application, First Publication No. 2023-081771
Patent Document 8: Japanese Unexamined Patent Application, First Publication No. 2022-177440

### SUMMARY OF INVENTION

### Technical Problem

However, in the above-described methods, in a case where the oxide nanoparticles are interposed between the metal particles are likely to become a foreign matter in sintering and act as an obstacle in the process, the application of the methods is difficult.

Meanwhile, in materials for which mechanical characteristics at high temperatures of higher than 1000°C are required, such as an iron-based alloy, a nickel-based alloy, and a medium entropy alloy, the formation of a so-called oxide dispersion strengthened (ODS) alloy, which improves tensile strength at high temperatures, is intentionally aimed at. In this type of oxide dispersion strengthened alloy, techniques of improving the strength at high temperatures using oxide nanoparticles as remaining foreign matter are known (refer to Patent Documents 4, 5, 6, and 7).

However, for aluminum-based materials having a low melting point (pure aluminum has a melting point of 660.3°C), since there is only a small number of applications for which heat resistance is required, the demand for the above-described oxide dispersion strengthened alloys is not high. In addition, oxide nanoparticles known to be used in such applications do not function as fluxes in sintering processes and do not have an effect of breaking oxide films.

A prior art for reducing a risk of silica remaining as foreign matter using an effect of forming a solid solution in a titanium structure by adding silica nanoparticles to a titanium alloy powder and reducing silica by titanium metal during sintering is known (refer to Patent Document 8).

In this technical idea of Patent Document 8, the fact that the standard free energy of formation of silica is lower than that of titanium oxide is used. That is, the technique is based on the fact that, during sintering, an oxide film of the titanium powder breaks and silica comes into contact with titanium metal, that is, the breakage of the oxide film of the titanium powder relatively easily occurs. However, it is considered that this technique is also hard to apply to aluminums forming a strong oxide film.

Due to the above-described backgrounds, in poorly sinterable aluminum-based materials, it is difficult to find an advantage outweighing the disadvantage of oxide nanoparticles interposed on the surfaces of powder particles.

Therefore, it is desired to provide a technique enabling high sinterability to be imparted by making aluminum powder particles and oxide nanoparticles coexist.

The present invention has been made in consideration of the above-described problems, and an object of the present invention is intended to provide a technique enabling both excellent sintered density and shape retention to be satisfied by making oxide nanoparticles, which conventionally have been considered to have a few advantages, coexist with aluminum powder particles, which are known as a poorly sinterable material of which an oxide film does not easily break.

### Solution to Problem

As a result of a variety of studies, the present inventors found that a powder for sintering of each of the following aspects capable of solving these problems can be provided and completed the present invention.

(Aspect 1) A powder for sintering of an aspect 1 according to the present invention is a powder for sintering containing a main powder composed of aluminum or an aluminum alloy and an oxide of one or more rare earth metal elements selected from scandium, yttrium, and lanthanoid elements, and a content of the oxide of the rare earth metal element in a total mass in the powder for sintering is 0.02 mass% or more and 1.5 mass% or less.

(Aspect 2) The powder for sintering of the aspect 1, in which the oxide of the rare earth metal element may be present on a surface of a particle of the main powder.

(Aspect 3) A powder for sintering of an aspect 3 is composed of a mixed powder having a particle of a main powder composed of aluminum or an aluminum alloy and an additive particle composed of an oxide of one or more rare earth metal elements selected from scandium, yttrium, and lanthanoid elements, a content of the oxide of the rare earth metal element in a total mass of the mixed powder is 0.02 mass% or more and 1.5 mass% or less, and at least a part of the additive particle may adhere to a surface of the particle of the main powder.

(Aspect 4) The powder for sintering of any one of the aspects 1 to 3, in which the rare earth metal element may be one or more selected from the group consisting of praseodymium, neodymium, samarium, europium, gadolinium, terbium, dysprosium, holmium, erbium, thulium, ytterbium, and lutetium. Among these rare earth metal elements, the rare earth metal element may be one or more selected from the group consisting of praseodymium, samarium, gadolinium, dysprosium, and ytterbium.

(Aspect 5) The powder for sintering of any one of the aspects 1 to 4, in which a particle diameter of the additive particle may be smaller than a particle diameter of the main powder.

(Aspect 6) The powder for sintering of any one of the aspects 1 to 5, in which a volume-based 50% cumulative average particle diameter (median diameter D₅₀) of the powder for sintering measured by a laser diffraction and scattering method may be 20 µm or more and 65 µm or less.

### ADVANTAGEOUS EFFECTS OF INVENTION

Since the powder for sintering of the present invention contains a main powder containing aluminum and an oxide of a rare earth metal element in an amount appropriate to this main powder, in the case of sintering this powder for sintering, at least a part of the oxide of the rare earth metal element is reduced, the rare earth metal element breaks oxide films on the surfaces of the particles of the main powder to form eutectic crystals together with aluminum on the surfaces of the particles of the main powder, an appropriate amount of a liquid phase, which does not become excessive, can be generated on the surfaces of the particles of the main powder, bonds between the particles of the main powder are promoted to improve the sintered density, and the shape retention after sintering can be favorably maintained.

Therefore, it is possible to obtain a sintered body that is a powder for sintering containing aluminum or an aluminum alloy, which is known as a poorly sinterable material, as a main composition, has a high sintered density, and is less likely to deviate from a desired shape.

### BRIEF DESCRIPTION OF DRAWINGS

[FIG. 1] A front view showing a powder for sintering of a first embodiment according to the present invention.
[FIG. 2] An appearance photograph of Example 4-6 and Comparative Examples 3-1, and 3-2.
[FIG. 3] An appearance photograph of Example 4-6 and Comparative Example 4-2.
[FIG. 4A] A SEM image showing an example of a powder for sintering produced in Example 2-1.
[FIG. 4B] An EDS mapping image showing a distribution state of oxygen obtained with an EDS detector by being made to correspond to the SEM image shown in FIG. 4A in Example 2-1.
[FIG. 4C] An EDS mapping image showing a distribution state of samarium obtained with the EDS detector by being made to correspond to the SEM image shown in FIG. 4A in Example 2-1.
[FIG. 5A] A SEM image showing an example of a powder for sintering produced in Example 3-5.
[FIG. 5B] An EDS mapping image showing a distribution state of oxygen obtained with the EDS detector by being made to correspond to the SEM image shown in FIG. 5A in Example 3-5.
[FIG. 5C] An EDS mapping image showing a distribution state of gadolinium obtained with the EDS detector by being made to correspond to the SEM image shown in FIG. 5A in Example 3-5.
[FIG. 6A] A SEM image showing an example of a powder for sintering produced in Example 4-4.
[FIG. 6B] An EDS mapping image showing a distribution state of oxygen obtained with the EDS detector by being made to correspond to the SEM image shown in FIG. 6A in Example 4-4.
[FIG. 6C] An EDS mapping image showing a distribution state of dysprosium obtained with the EDS detector by being made to correspond to the SEM image shown in FIG. 6A in Example 4-4.
[FIG. 7] A graph showing a differential thermal analysis curve in a powder for sintering of Comparative Example 1-1.
[FIG. 8] A graph showing a differential thermal analysis curve in a powder for sintering of Comparative Example 4-1.
[FIG. 9] A graph showing a differential thermal analysis curve in a powder for sintering of Example 1-1.
[FIG. 10] A graph showing a differential thermal analysis curve in a powder for sintering of Example 2-1.
[FIG. 11] A graph showing a differential thermal analysis curve in a powder for sintering of Example 5-1.
[FIG. 12] A partial cross-sectional view of a sintered body produced using the powder for sintering of Comparative Example 1-1.
[FIG. 13] A partial cross-sectional view of a sintered body produced using the powder for sintering of Example 1-1.
[FIG. 14] A partial cross-sectional view of a sintered body produced using the powder for sintering of Example 2-1.
[FIG. 15] A partial cross-sectional view of a sintered body produced using the powder for sintering of Example 3-5.
[FIG. 16] A partial cross-sectional view of a sintered body produced using the powder for sintering of Example 4-4.
[FIG. 17] A partial cross-sectional view of a sintered body produced using the powder for sintering of Example 5-1.
[FIG. 18] A photograph showing an EDS point analysis position in a cross section of the sintered body produced using the powder for sintering of Example 2-1.
[FIG. 19] A graph showing a spectrum corresponding to the EDS point analysis position shown in FIG. 18 and each element quantitative calculation result.
[FIG. 20] A graph showing a particle size distribution of the powder for sintering of Comparative Example 1-1.
[FIG. 21] A graph showing a particle size distribution of a powder for sintering of Comparative Example 1-2.
[FIG. 22] A graph showing a particle size distribution of a powder for sintering of Comparative Example 1-3.

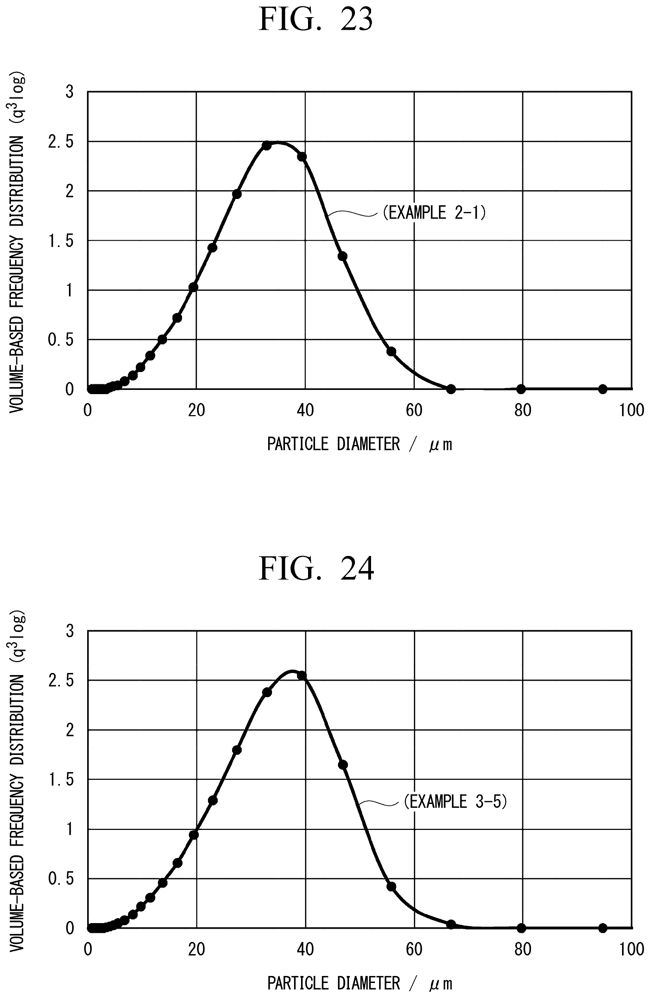

[FIG. 23] A graph showing a particle size distribution of the powder for sintering of Comparative Example 2-1.
[FIG. 24] A graph showing a particle size distribution of a powder for sintering of Comparative Example 3-5.

### DESCRIPTION OF EMBODIMENT

Hereinafter, an embodiment of the present invention will be described in detail, but the present invention is not limited to the following embodiment.

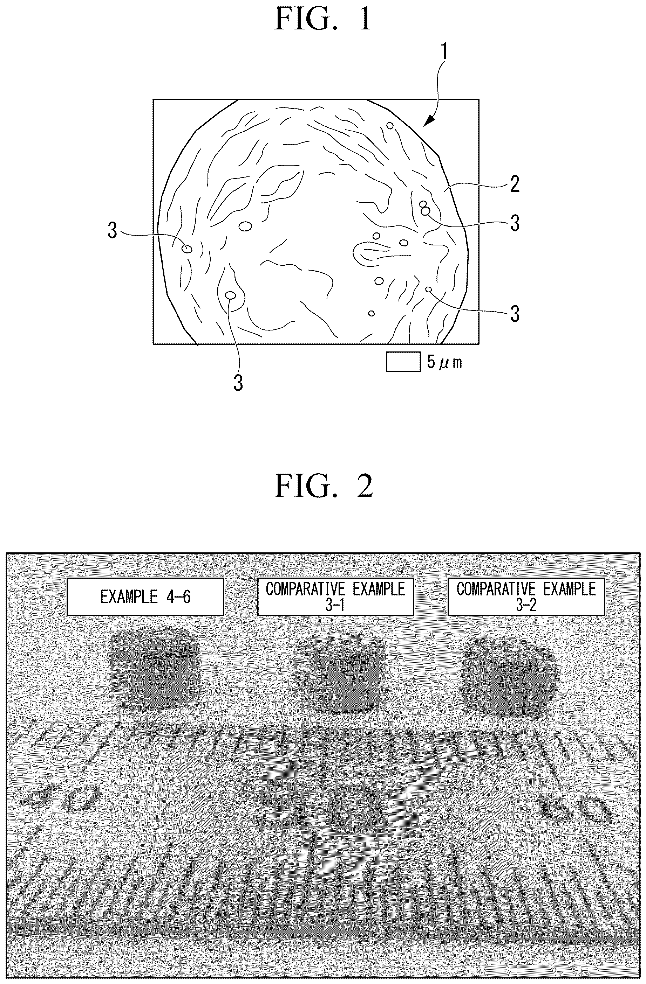

FIG. 1 is an enlarged schematic view showing a particle of a powder for sintering 1 of a first embodiment according to the present invention. This powder for sintering 1 contains a main powder 2 composed of aluminum or an aluminum alloy as a main body and 0.02 mass% or more and 1.5 mass% or less of an oxide of a rare earth metal element relative to the total mass of the powder for sintering 1. In the case of being enlarged and observed in more detail, the particle of the powder for sintering 1 includes a particle of the main powder 2 composed of aluminum or an aluminum alloy and additive particles 3 composed of the oxide of a rare earth metal element dispersed on the surface of the particle of this main powder 2. In the powder for sintering 1, additive particles 3 not adhering to the surface of the particle of the main powder 2 may or may not be present in a mixed manner.

In a case where the main powder 2 is composed of an aluminum alloy, an element that is contained in the aluminum alloy that is applied is not particularly limited, and any element that is contained in ordinarily-known aluminum alloys may be contained.

As the main powder 2, as an example, an aluminum alloy having any of the composition systems represented by A1000 series, A2000 series, A3000 series, A4000 series, A5000 series, A6000 series, A7000 series, and the like that are specified in the JIS standards may be used. Alternatively, an aluminum alloy powder composed of a different ordinary aluminum alloy to which an element that is not specified for these series of alloys has been added may also be used. In the present specification, "%" indicating the content of an element indicates "mass%" at all times unless particularly otherwise described.

A1050 is aluminum having a purity of 99.5% or higher and may contain Fe, Si, and the like as inevitable impurities.

A1100 series is aluminum alloys having a purity of 99% or higher, and as an example, A1100 has a composition containing 1.0% or less of Fe and Si in total, approximately 0.05% to 0.20% of Cu, 0.05% or less of Mn, and 0.1% or less of Zn with a remainder of an impurity.

A2000 series is aluminum alloys to which a large amount of Cu has been added, and as an example, A2024 is an aluminum alloy containing 0.5% or less of Si, 0.5% or less of Fe, 3.8% to 4.9% of Cu, 0.3% to 0.9% of Mn, 1.2% to 1.8% of Mg, 0.1% or less of Cr, and 0.25% or less of Zn.

A3000 series is AlMn-based aluminum alloys, and as an example, A3003 is an aluminum alloy containing 0.6% or less of Si, 0.7% or less of Fe, 0.05% or less of Cu, 1.0% to 1.5% of Mn, and 0.1% or less of Zn.

A4000 series is aluminum alloys to which Si has been added, and as an example, A4032 is an aluminum alloy containing 11.0% to 13.5% of Si, 1.0% or less of Fe, 0.5% to 1.3% of Cu, 0.8% to 1.3% of Mg, 0.10% or less of Cr, and 0.25% or less of Zn.

A5000 series is aluminum alloys to which Mg has been added, and as an example, A5052 is an aluminum alloy containing 0.25% or less of Si, 0.4% or less of Fe, 0.10% or less of Cu, 0.1% or less of Mn, 2.2% to 2.8% of Mg, 0.15% to 0.35% of Cr, and 0.1% or less of Zn.

A6000 series is aluminum alloys to which Mg and Si have been added, and as an example, A6061 is an aluminum alloy containing 0.4% to 0.8% of Si, 0.7% or less of Fe, 0.15% to 0.4% of Cu, 0.15% or less of Mn, 0.8% to 1.2% of Mg, 0.15% to 0.35% of Cr, 0.25% or less of Zn, and 0.15% or less of Ti.

A7000 series is aluminum alloys to which Zn and Mg have been mainly added, and as an example, A7075 is an aluminum alloy containing 0.4% or less of Si, 0.5% or less of Fe, 1.2% to 2.0% of Cu, 0.3% or less of Mn, 2.1% to 2.9% of Mg, 0.18% to 0.35% of Cr, 5.1% to 6.1% of Zn, and 0.2% or less of Ti.

The rare earth element constituting the additive particle 3 is preferably one or more selected from the group consisting of praseodymium (Pr), neodymium (Nd), samarium (Sm), europium (Eu), gadolinium (Gd), terbium (Tb), dysprosium (Dy), holmium (Ho), erbium (Er), thulium (Tm), ytterbium (Yb), and lutetium (Lu) and more preferably one or more selected from the group consisting of praseodymium (Pr), samarium (Sm), gadolinium (Gd), dysprosium (Dy), and ytterbium (Yb).

These rare earth elements can be described to be composed of scandium, yttrium, and other lanthanoid elements. Among the rare earth elements, lanthanum, cerium, praseodymium, neodymium, promethium, samarium, europium, gadolinium, terbium, dysprosium, holmium, erbium, thulium, ytterbium, and lutetium are lanthanoid elements. In the present embodiment, elements having a larger atomic number than praseodymium are preferably applied, and in particular, one or more of praseodymium, samarium, gadolinium, dysprosium, and ytterbium are more preferably used as described above.

The additive particles 3 are preferably fine particles having a smaller particle diameter than the particle of the main powder 2 and adhere to arbitrary positions on the surface of the particle of the main powder 2 in a dispersed state. The particle of the main powder 2 may have a shape close to a sphere as shown in the drawing or may form a flat shape or an irregular shape. The main powder 2 has favorable flowability when having a shape close to a sphere. The additive particle 3 may also have a shape close to a sphere or may form a flat shape or an irregular shape, which makes it easy for the additive particle to adhere to the particle of the main powder 2.

The volume-based 50% cumulative average particle diameter (median diameter D₅₀) of the powder for sintering 1 measured by a laser diffraction and scattering method is preferably 20 µm or more and 65 µm or less.

When the average particle diameter (D₅₀) of the powder for sintering 1 is within the above-described range, it becomes easy to secure a necessary shaping accuracy while maintaining suitable flowability at the time of using the powder for sintering 1 of the present embodiment in powder metallurgy.

In a case where the average particle diameter of the powder for sintering 1 is larger than 65 µm, the flowability as the powder for sintering 1 improves, but it becomes easy for voids to be generated among the particles, and it thus becomes difficult to obtain a high-density sintered body during sintering in a powder sintering device. In consideration of the purpose of obtaining a high-density sintered body, the average particle diameter of the powder for sintering 1 is more preferably 45 µm or less.

In a case where the average particle diameter of the powder for sintering 1 is smaller than 20 µm, the flowability of the powder for sintering 1 deteriorates, and there is a possibility of a concern of ignition specific to aluminum powders or a concern of dust scattering. In consideration of these facts, the average particle diameter of the powder for sintering 1 is more preferably 20 µm or more and 45 µm or less.

The particle diameter of the additive particle 3 is preferably smaller than the particle diameter of the main powder 2. In this case, a mixed powder composed of a plurality of the main powders 2 containing the above-described amount of the additive particles 3 is less likely to decrease the packing density during sintering. In addition, since the relatively small additive particles 3 can be present among the particles of the plurality of main powders 2, even in a case where the rare earth metal element remains among the particles that the main powder 2 constitutes after sintering, the additive particles play a role of connecting the particles of the main powder 2. Since the particle diameter of the particle of the oxide of the rare earth metal element is smaller than that of the main powder 2, when the amount added is approximately 1.5 mass% or less, the average particle diameter of the powder for sintering 1 and the average particle diameter of the main powder 2 become equivalent to each other.

In the present invention, the ratio between the average particle diameter of the additive particles 3 and the average particle diameter of the main powder 2 is not limited and may be 1% or more and 50% or less or may be 8% or more and 30% or less. These average particle diameters may be volume-based 50% cumulative average particle diameters (median diameters D₅₀).

The additive particles 3 exhibit an effect of generating a liquid phase on the surface of the main powder 2 during heating at the time of performing sintering. As a mechanism of the liquid phase being generated, it is considered that a part of the additive particles 3, which are an oxide, are reduced during sintering, the generated rare earth metal breaks an oxide film that is present on the surface of the main powder 2 to generate eutectic crystals together with aluminum in the main powder, and the generated rare earth metal element-aluminum eutectic crystals generate a liquid phase to promote bonds between the particles of the main powder 2. In the mixed powder, an appropriate content of the additive particles 3 is 0.02 mass% or more and 1.5 mass% or less relative to the total mass of the powder for sintering 1 and may be 0.05 mass% or more and 1.2 mass% or less or 0.1 mass% or more and 1.1 mass% or less. When the content of the additive particles 3 is adjusted to this range, it is possible to generate an appropriate amount of a liquid phase on the surface of the main powder 2. When the content of the additive particles 3 increases to exceed this range, the liquid phase is excessively generated, and the shape of a sintered body collapses. Since the particle diameter of the additive particle 3 is smaller than that of the main powder 2, it is possible to secure the amount of a favorable liquid phase generated without dropping the packing density of the main powder 2 and to obtain a high-density sintered body after sintering.

In order to obtain a structure in which the additive particles 3 are present on the surface of the main powder 2 in a dispersed state, it is possible to adopt a method in which the main powder 2 and the additive particles 3 are separately prepared, and both are then mixed together. Alternatively, a method in which the additive particles 3 are made to adhere to the surface of the main powder 2 using a particle deposition method, such as sputtering, may also be adopted. In any case, it is preferable to obtain a state in which the additive particles 3 are dispersed as uniformly as possible around the main powder 2 in the case of producing the powder for sintering.

Alternatively, it is also possible to adopt a structure in which the above-described appropriate amount of the oxide of the rare earth element, which is supposed to be included as the additive particles 3, is included with respect to all of the particles of the main powder 2 or a structure in which the above-described appropriate amount of the oxide of the rare earth element, which is supposed to be included as the additive particles 3, is included only in the surface or surface layer portion of the particle of the main powder 2.

In order to produce the powder for sintering 1, for example, a gas atomization method can be used. The gas atomization method is a method in which molten metal is sprayed as fine liquid droplets at a high speed in an air or an inert gas together with an inert gas from the front end of a spraying device, such as a nozzle, to rapidly cool the molten metal and a powder composed of the particles of the rapidly-cooled molten metal is produced. In the case of spraying the molten metal from the nozzle, it is possible to use, for example, an inert gas, such as argon gas or nitrogen gas. According to the gas atomization method, it is possible to obtain a powder having a target composition with a uniform particle diameter. The powder for sintering can also be obtained by a method in which the main powder 2 is formed by the gas atomization method, the additive particles 3 composed of the rare earth metal, which are separately produced by the gas atomization method or a different method, are added to and mixed with this main powder 2, and a necessary amount of at least a part of the additive particles 3 are made to adhere to the surface of the particle of the main powder 2.

### EXAMPLES

Next, the effect of the present invention will be demonstrated with examples of the present invention.

Main powders of Comparative Examples 1-1, 1-2, and 1-3 in Table 1 below were produced by a nitrogen gas atomization method using molten aluminum, and the volume-based 50% cumulative average particle diameters (median diameters D₅₀) were measured. Any of gadolinium oxide particles, dysprosium oxide particles, praseodymium oxide particles, and ytterbium oxide particles were blended with these main powders so that the contents (mass%) reached values shown in Table 1, thereby producing mixed powders for sintering.

In addition, main powders of Examples 2-1 and 3-5 in Table 1 were produced by the nitrogen gas atomization method using molten aluminum, and the volume-based 50% cumulative average particle diameters (median diameters D₅₀) were measured in the same manner. Samarium oxide particles or gadolinium oxide particles were blended with these main powders so that the contents (mass%) reached values shown in Table 1, thereby producing mixed powders for sintering having a surface to which each of the oxide particles had adhered.

Additionally, mixed powders for sintering of example samples and comparative example samples which had a surface to which the particles of an oxide of a rare earth metal element shown in Table 1 had adhered and had a content of the rare earth metal element and a volume-based 50% cumulative average particle diameter shown in Table 1 were produced.

Each of the obtained powders for sintering was packed into a boron nitride cylindrical cell having an inner diameter of approximately 5.6 mm and a depth of approximately 3.5 mm, tapped 300 times for denser packing, and then sintered by being heated at 650°C for one hour in argon gas that was supplied at 100 mL·min⁻¹.

The sintered densities of the obtained sintered bodies were measured with an assumption that the density of pure aluminum was one. In a case where the sintered density at this point in time was below 85%, the amount of a liquid phase was determined to be insufficient. In a case where a sintered density of 85% or higher was recorded, the dimensions (the outer diameter and the height) of the sintered body were measured, and whether the amount of a liquid phase generated was appropriate or excessive was determined.

A standard for determining whether the amount of the liquid phase generated was appropriate or excessive was whether a maximum outer diameter of 5.12 mm or less and a height of 3.5 mm or less were satisfied or not. In a case where both the maximum outer diameter and the height satisfied these, it was determined that the shape did not collapse, and the liquid phase did not excessively develop, that is, the generation of an appropriate amount of the liquid phase appeared. In a case where any one or both of the maximum outer diameter and the height failed to satisfy the requirements, it was determined that the shape collapsed, that is, the amount of the liquid phase was excessive.

For the sample of Comparative Example 1-1, it was confirmed by glow discharge mass spectrometry (GDMS) that the contents of Sc and Ce were each 0.1 ppm, the content of La was 0.2 ppm, and the contents of other rare earth elements were a lower detection limit (0.1 ppm) or less.

For the sample of Comparative Example 1-2, it was confirmed by glow discharge mass spectrometry (GDMS) that the content of Sc was 0.1 ppm, the content of La was 0.2 ppm, the content of Ce was 0.3 ppm, the content of Sm was 2 ppm, and the contents of other rare earth elements were the lower detection limit (0.1 ppm) or less.

For the sample of Comparative Example 1-3, it was confirmed by glow discharge mass spectrometry (GDMS) that the contents of Sc, Y, and Nd were each 0.1 ppm, the content of La was 2 ppm, the content of Ce was 3 ppm, and the contents of other rare earth elements were the lower detection limit (0.1 ppm) or less.

A sample of Example 1-1 was produced by adding a commercially available Pr₆O₁₁ powder (additive particles) having D₅₀ of 4.67 µm to the aluminum powder (main powder) of Comparative Example 1-1.

Samples of Examples 3-1 to 3-4 and samples of Comparative Examples 3-1 to 3-3 were produced by adding a commercially available Gd₂O₃ powder (additive particles) having D₅₀ of 2.43 µm to the aluminum powder (main powder) of Comparative Example 1-1.

Samples of Examples 4-1 to 4-4 and 4-6 and samples of Comparative Examples 4-1, 4-2, 4-4, 4-6, and 4-7 were produced by adding a commercially available Dy₂O₃ powder (additive particles) having D₅₀ of 2.94 µm to the aluminum powder (main powder) of Comparative Example 1-1.

A sample of Example 4-5 was produced by adding the commercially available Dy₂O₃ powder (additive particles) having D₅₀ of 2.94 µm to the aluminum powder (main powder) of Comparative Example 1-2.

Samples of Comparative Examples 4-3 and 4-5 were produced by adding the commercially available Dy₂O₃ powder (additive particles) having D₅₀ of 2.94 µm to the aluminum powder (main powder) of Comparative Example 1-3.

A sample of Example 5-1 was produced by adding a commercially available Yb₂O₃ powder (additive particles) having D₅₀ of 2.55 µm to the aluminum powder (main powder) of Comparative Example 1-1.

### Measurement of particle size distribution

In the measurement of the particle size distribution of the powder for sintering, measurement of a particle size distribution was performed by a laser diffraction method, and a volume-based cumulative frequency diameter (median diameter D₅₀) was calculated from the obtained result as an average particle diameter.

### Measurement of differential scanning calorimeter (DSC) spectrum of powder for sintering

Approximately 10 to 20 mg of the powder for sintering sample was collected in an alumina DSC pan, heated up to 650°C from room temperature at 15 °C·min⁻¹ while Ar gas (G2 grade) was flowed at 100 mL·min⁻¹, and then held at 650°C for one hour, and the differential scanning calorimeter (DSC) spectrum was measured.

### ICP measurement of rare earth element in powder for sintering sample

The powder for sintering sample was dissolved in an acid, and the content of the rare earth element in the powder for sintering sample was measured by ICP.

### Glow discharge mass spectrometry of rare earth element in powder for sintering sample

The powder for sintering sample was compression-molded and measured in a flat cell using Astrum manufactured by Nu Instruments under a discharge gas of Ar (> 99.9999) in a constant-current mode of 2.5 mA and 1.0 kV for an integral time of 160 msec/ch. A Ta sample mask (10 mm) was used, and the mass resolution was 4000 (Δ/Δm: 10% peak height).

### Measurement of sintered density

A true density was calculated by an Archimedes substitution method. Sintered densities in Table 1 are indicated by percentages with an assumption that the density of bulk pure aluminum was one.

### Measurement of maximum outer diameter of sintered body and height of sintered body

The maximum outer diameters of the sintered bodies and the heights of the sintered bodies were measured using a digital caliper.

The test results of each of the items described above are summarized in Table 1 below. In Table 1, the contents of rare earth elements were measured by an ICP (inductively coupled plasma) method unless particularly otherwise noted.

**[Table 1]**

| | | | Content of rare earth metal element (mass% or ppm) | D50/µm | Sintered density (%) | Maximum outer diameter of sintered body (mm) | Height of sintered body (mm) | Amount of liquid phase | Note |
|---|---|---|---|---|---|---|---|---|---|
| | 1-1 | Pure Al | 1.7 ppm or less | 29.8 | 73.5 | - | - | Insufficient | Produced by nitrogen atomization method |
| | 1-2 | | 3.8 ppm or less | 21.3 | 82.9 | - | - | | |
| | 1-3 | | 6.4 ppm or less | 10.7 | 61.4 | - | - | | |
| | 3-1 | Pure Al + Gd oxide | 2.9 mass% | 26.4 | 91.0 | 5.13 | 3.35 | Excessive | Addition of Gd₂O₃ to Comparative Example 1-1 |
| | 3-2 | | 4.7 mass% | 25.9 | 92.5 | 5.44 | 3.22 | | |
| | 3-3 | | 9.7 mass% | 25.3 | 87.4 | 5.57 | 2.99 | | |
| Comparative Example | 4-1 | Pure Al + Dy oxide | 0.012 mass% | 25.2 | 71.6 | - | - | Insufficient | Addition of Dy₂O₃ to Comparative Example 1-1 |
| | 4-2 | | 1.9 mass% | 25.4 | 92.0 | 4.78 | 3.65 | Excessive | |
| | 4-3 | | 2.3 mass% | 9.61 | 70.3 | - | - | Insufficient | Addition of Dy₂O₃ to Comparative Example 1-3 |
| | 4-4 | | 2.8 mass% | 26.0 | 88.6 | 5.15 | 3.17 | Excessive | Addition of Dy₂O₃ to Comparative Example 1-1 |
| | 4-5 | | 3.2 mass% | 8.07 | 69.7 | - | - | Insufficient | Addition of Dy₂O₃ to Comparative Example 1-3 |
| | 4-6 | | 4.6 mass% | 25.9 | 87.8 | 5.51 | 3.18 | Excessive | Addition of Dy₂O₃ to Comparative Example 1-1 |
| | 4-7 | | 9.5 mass% | 24.0 | 85.3 | 5.56 | 3.26 | | |
| | 1-1 | Pure Al + Pr oxide | 0.85 mass% | 26.7 | 90.6 | 4.91 | 3.49 | | Addition of Pr₆O₁₁ to Comparative Example 1-1 |
| | 2-1 | Pure Al+S oxide | 1.1 mass% | 30.1 | 98.4 | 5.11 | 3.35 | | Produced by nitrogen atomization method |
| | 3-1 | Pure Al+Gd oxide | 0.02 mass% | 26.3 | 89.4 | 4.98 | 3.33 | | Addition Gd₂O₃ to Comparative Example 1-1 |
| | 3-2 | | 0.05 mass% | 25.7 | 91.2 | 4.87 | 3.37 | | |
| | 3-3 | | 0.09 mass% | 26.0 | 92.0 | 4.87 | 3.25 | | |
| | 3-4 | | 0.38 mass% | 26.0 | 91.5 | 4.87 | 3.39 | | |
| Example | 3-5 | | 1.1mass% | 31.4 | 95.4 | 4.90 | 3.41 | Appropriate | Produced by nitrogen atomization method |
| | 4-1 | Pure Al+Dy oxide | 0.044 mass% | 25.5 | 92.0 | 4.83 | 3.36 | | Additive of Dy₂O₃ to Comparative Example 1-1 |
| | 4-2 | | 0.095 mass% | 26.2 | 90.4 | 4.96 | 3.44 | | |
| | 4-3 | | 0.44 mass% | 26.2 | 90.4 | 4.86 | 3.43 | | |
| | 4-4 | | 0.80 mass% | 26.4 | 95.0 | 4.85 | 3.47 | | |
| | 4-5 | | 0.98 mass% | 21.0 | 93.0 | 4.67 | 3.20 | | Additive of Dy₂O₃ to Comparative Example 1-2 |
| | 4-6 | | 1.4 mass% | 25.8 | 91.8 | 4.93 | 3.31 | | Additive of Dy₂O₃ to Comparative Example 1-1 |
| | 5-1 | Pure Al+Yb oxide | 0.88 mass% | 26.2 | 94.1 | 4.94 | 3.39 | | Additive of Yb₂O₃ to Comparative Example 1-1 |

As shown in Table 1, the samples of the examples are all powders for sintering containing 0.02 mass% to 1.40 mass% of any of gadolinium oxide particles, dysprosium oxide particles, praseodymium oxide particles, samarium oxide particles, and ytterbium oxide particles. According to these powders for sintering of the examples, it was possible to obtain sintered bodies in which a high sintered density within a range of 89.6% to 98.4% was exhibited and shape collapse due to the excessive generation of a liquid phase did not occur.

On the other hand, in a sample for which the content of the rare earth metal element was set to 0.012 mass% as in Comparative Example 4-1, since the amount of the rare earth metal element added was small, the sintered density did not become sufficiently high.

In addition, samples for which the amount of the rare earth metal element added was set to 1.9 to 9.7 mass% as in Comparative Examples 3-1 to 3-3 or Comparative Examples 4-2, 4-4, 4-6, and 4-7, the amounts of the rare earth metals added were too large, development of the liquid phases excessively occurred, and consequently, the shapes of the sintered bodies collapsed.

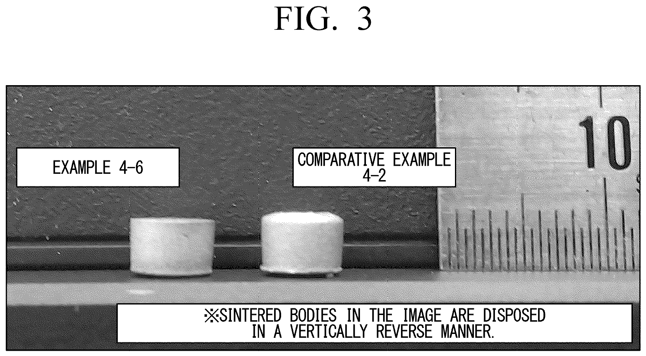

In Comparative Example 3-1 and Comparative Example 3-2, liquid phases excessively generated from the side surfaces of the sintered bodies appear as shown in the image of FIG. 2. Due to the appearance of such liquid phases, the maximum outer diameters reached values exceeding 5.12 mm. In addition, in Comparative Example 4-2, a liquid phase excessively generated from the side surface of the sintered body appeared as shown in the image of FIG. 3. Due to such a liquid phase, the height reached values exceeding 3.5 mm.

From the above-described comparisons, it was found that according to a powder for sintering that is composed of aluminum or an aluminum alloy and contains 0.02 mass% or more and 1.5 mass% or less of a rare earth metal element around a main powder, it is possible to obtain a sintered body exhibiting a high sintered density of 89% or higher and having a shape that does not collapse.

In the present examples, a case where the sintered density was 85% or higher and the maximum outer diameter of 5.12 mm or less and the height of 3.5 mm or less were satisfied was regarded as satisfying the fact that "the sintered density after sintering is high, the amount of a liquid phase generated is appropriate, and the shape thus does not collapse," and powder samples satisfying this fact were regarded as the examples.

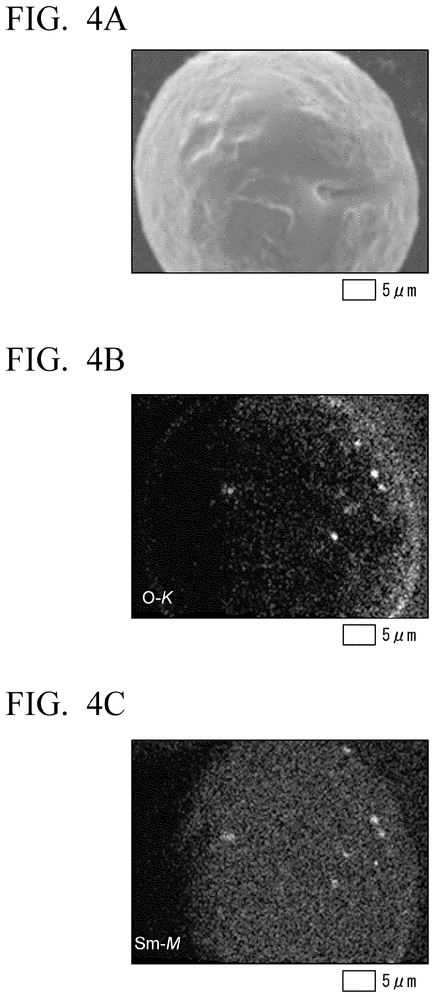

FIG. 4A shows a field of view for acquiring EDS mapping of the powder for sintering in the sample of Example 2-1, FIG. 4B shows an oxygen distribution in the same field of view of the same sample, and FIG. 4C shows the distribution of samarium (Sm) in the same field of view of the same sample.

From the analysis results shown in FIG. 4A to FIG. 4C, it was found that since samarium and oxygen were present at the same positions on the surface of the aluminum powder, a samarium oxide was distributed on the surface of the aluminum powder.

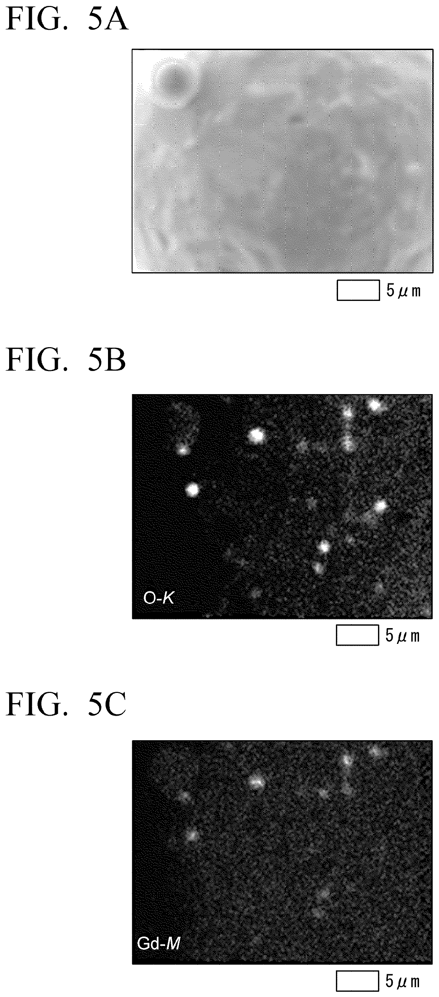

FIG. 5A shows a field of view for acquiring EDS mapping of the powder for sintering in the sample of Example 3-5, FIG. 5B shows an oxygen distribution in the same field of view of the same sample, and FIG. 5C shows the distribution of gadolinium (Gd) in the same field of view of the same sample.

From the analysis results shown in FIG. 5A to FIG. 5C, it was found that since gadolinium and oxygen were present at the same positions on the surface of the aluminum powder, a gadolinium oxide was distributed on the surface of the aluminum powder.

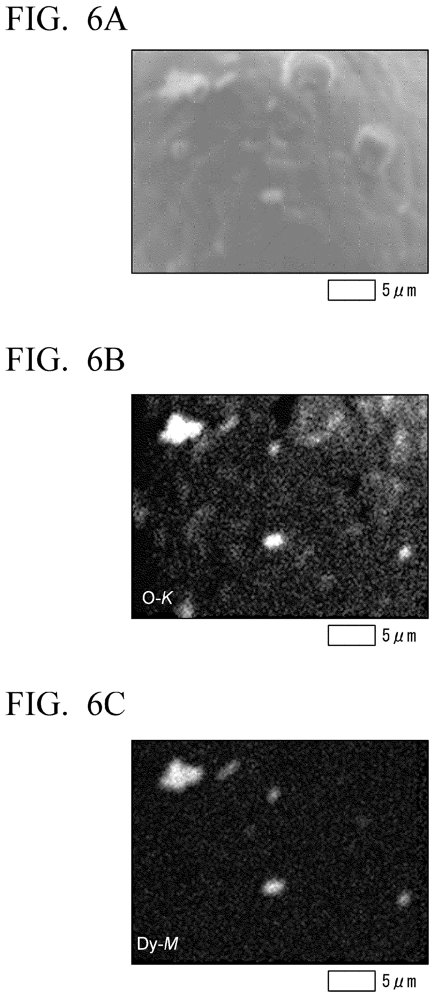

FIG. 6A shows a field of view for acquiring EDS mapping of the powder for sintering in the sample of Example 4-4, FIG. 6B shows an oxygen distribution in the same field of view of the same sample, and FIG. 6C shows the distribution of dysprosium (Dy) in the same field of view of the same sample.

From the analysis results shown in FIG. 6A to FIG. 6C, it was found that since dysprosium and oxygen were present at the same positions on the surface of the aluminum powder, a dysprosium oxide was distributed on the surface of the aluminum powder.

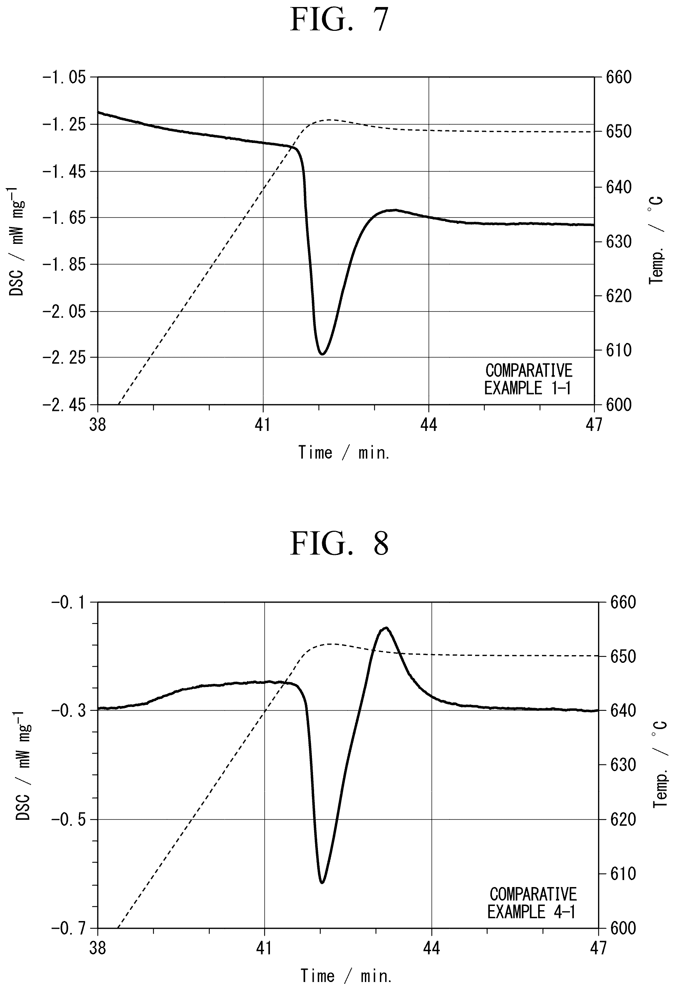

FIG. 7 is a graph showing a differential thermal analysis curve in the powder for sintering of Comparative Example 1-1, and FIG. 8 is a graph showing a differential thermal analysis curve in the powder for sintering of Comparative Example 4-1.

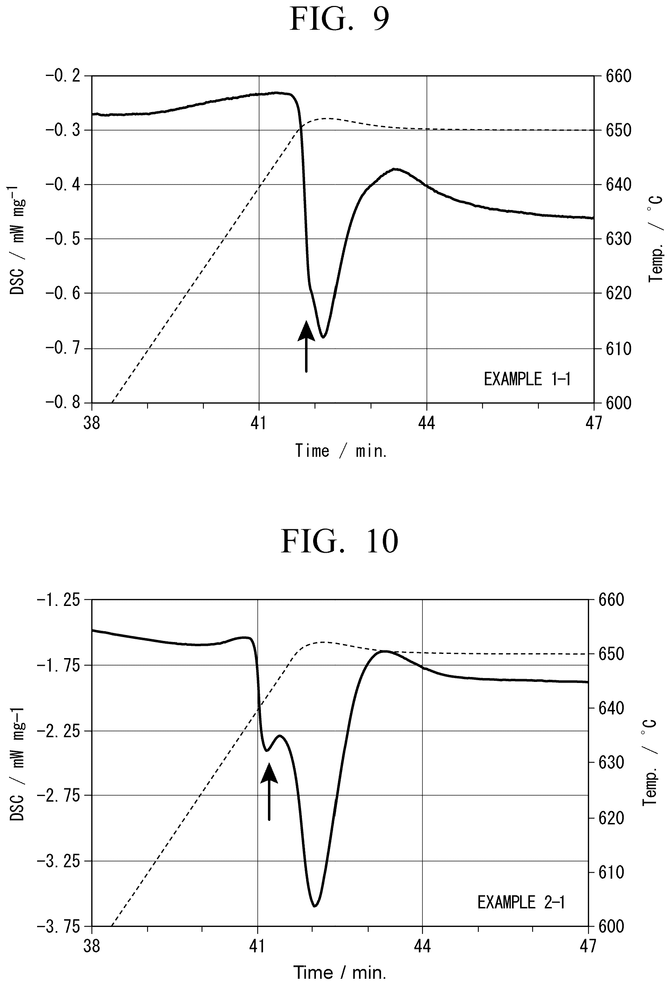

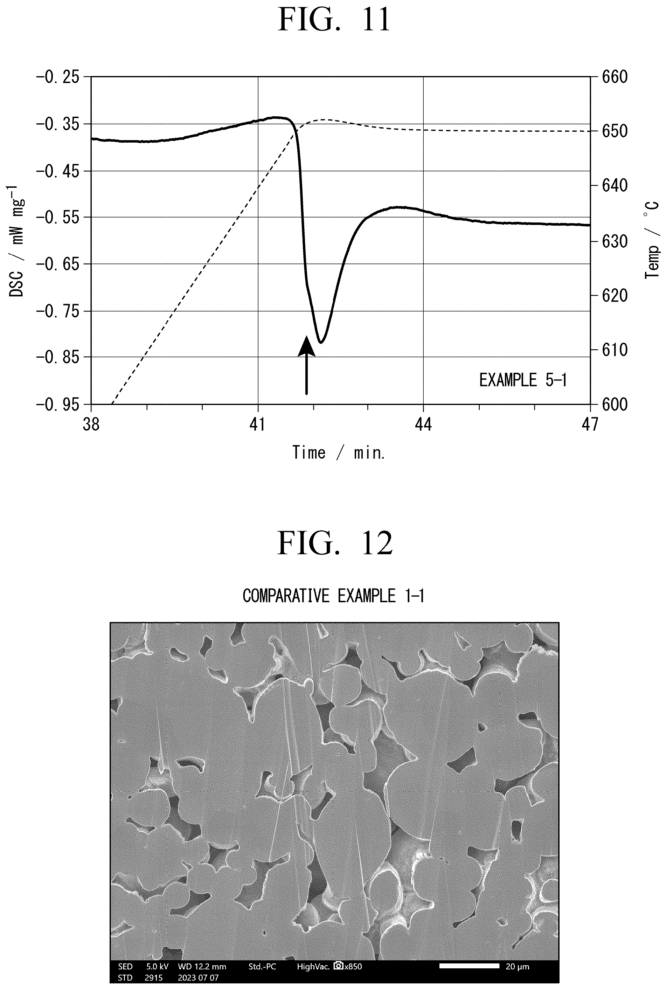

FIG. 9 is a graph showing a differential thermal analysis curve in the powder for sintering of Example 1-1, FIG. 10 is a graph showing a differential thermal analysis curve in the powder for sintering of Example 2-1, and FIG. 11 is a graph showing a differential thermal analysis curve in the powder for sintering of Example 5-1.

All of the samples for which the powder for sintering of the examples were used had favorable sinterability. From this fact, it was possible to assume from the differential thermal analysis results that in powders for sintering containing the rare earth metal element like the Examples, the chemical reaction between aluminum and the rare earth metal elements generates a liquid phase that promotes sintering, but not to an excessive degree.

FIG. 7 to FIG. 11 show the results of differential thermal analyses under almost the same conditions as for sintering, and from the differential thermal analysis results of the examples, it was possible to confirm that a separate endothermic peak or a shoulder was generated immediately before the main endothermic peak belonging to the partial melting of aluminum.

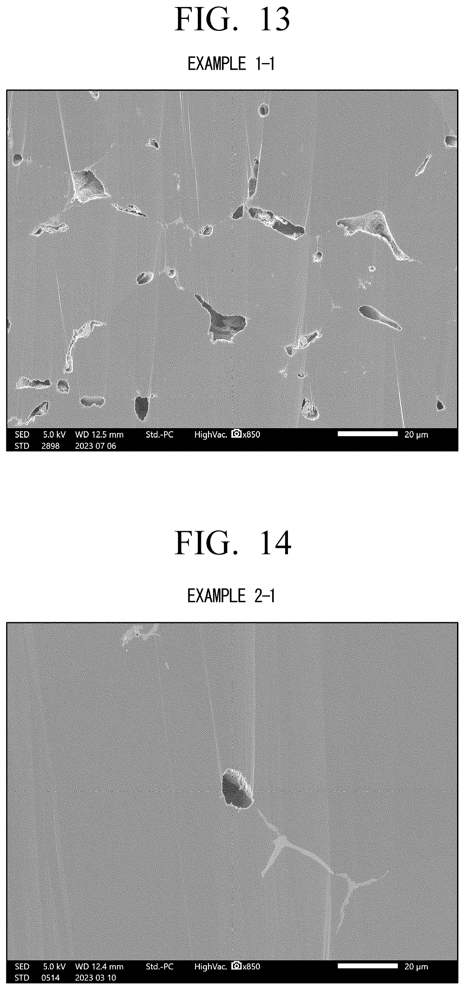

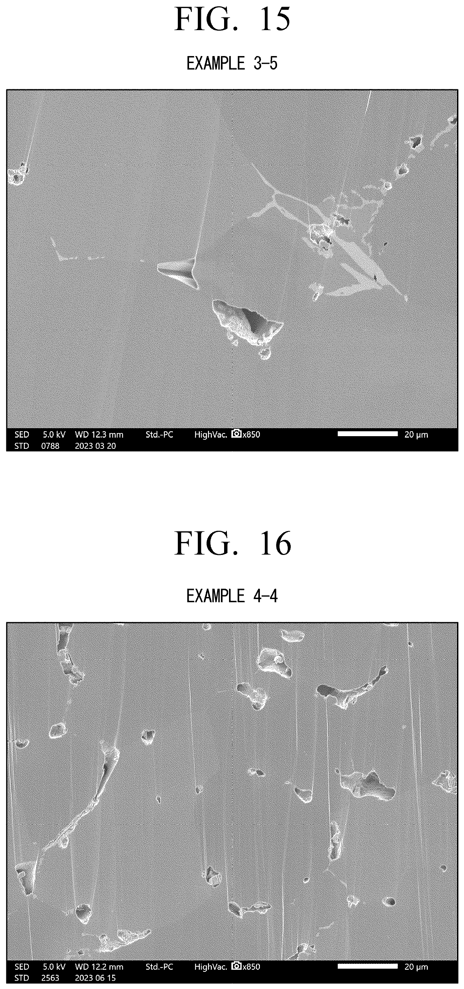

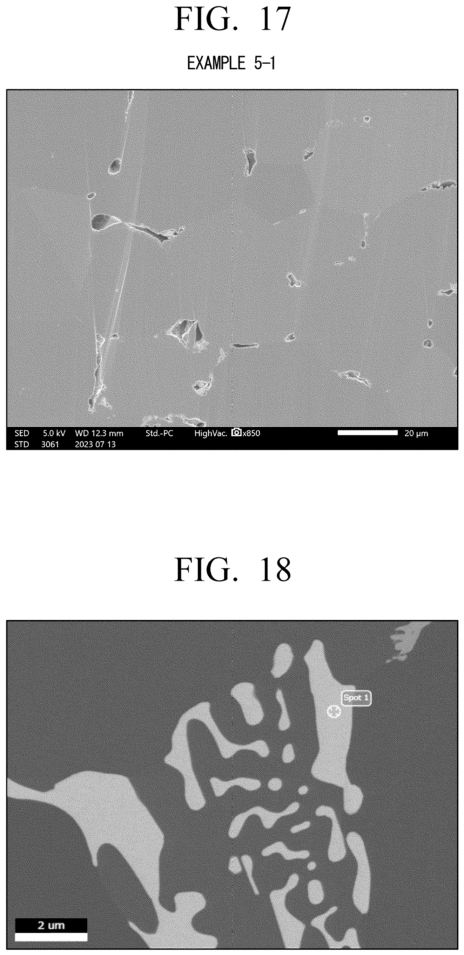

FIG. 12 shows a SEM image of a cross section of the sintered body for which the powder of Comparative Example 1-1 was used, FIG. 13 shows a SEM image of a cross section of the sintered body for which the powder of Example 1-1 was used, and FIG. 14 shows a SEM image of a cross section of the sintered body for which the powder of Example 2-1 was used. FIG. 15 shows a SEM image of a cross section of the sintered body for which the powder of Example 3-5 was used, FIG. 16 shows a SEM image of a cross section of the sintered body for which the powder of Example 4-4 was used, and FIG. 17 shows a SEM image of a cross section of the sintered body for which the powder of Example 5-1 was used. For all of the SEM images, the observation magnification was 850 times, and the scale bar (a horizontally long white bar below the SEM image) in each drawing indicates 20 µm. From the comparisons of FIG. 12 to FIG. 17, it was possible to grasp that the densities after sintering were higher in Examples 1-1, 2-1, 3-5, 4-4, and 5-1 than in Comparative Example 1-1.

Since all of the samples of the Examples exhibited high sintered densities, it was possible to assume that the generation of the liquid phases that contributed to improvement in the sintered densities was attributed to the reduction of the oxides of the rare earth metal elements.

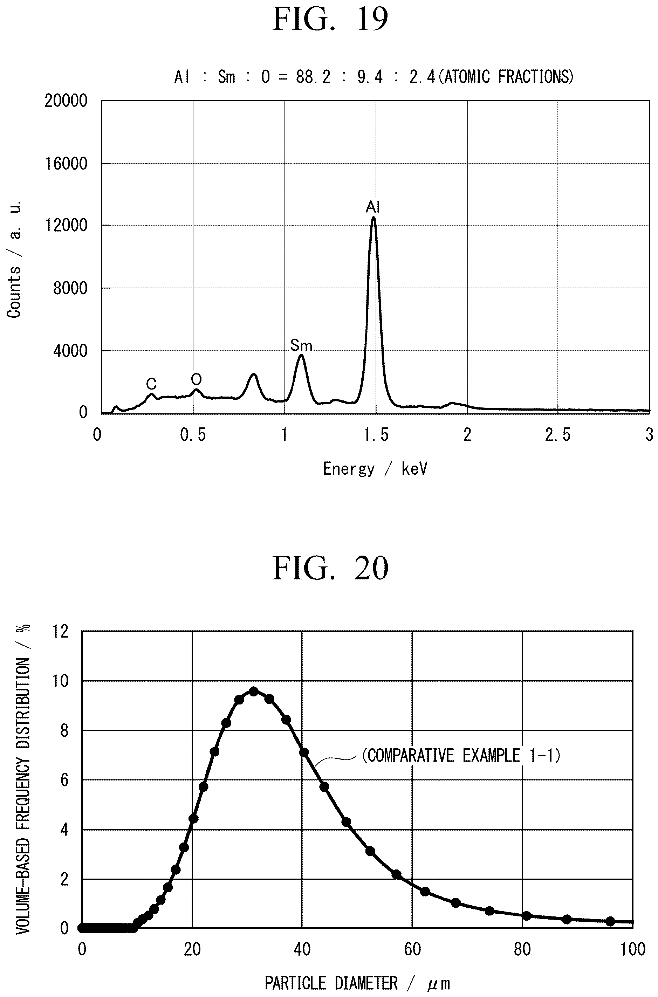

As an example, FIG. 18 shows a cross section of the sintered body produced using the powder for sintering of Example 2-1, and FIG. 19 shows a point analysis spectrum by EDS (energy dispersive x-ray spectroscopy) obtained at a position indicated by a + mark in FIG. 18. The position indicated by the + mark in FIG. 18 is a part of an irregular samarium precipitate in an aluminum matrix that was generated by a reaction between aluminum and samarium.

In the powder for sintering according to the present invention, the rare earth metal is present as an oxide as described above in a powder state. However, in consideration of the fact that, after the formation of the sintered body, the atomic fractions of Al/Sm/O reached 88.2/9.4/2.4 as shown in FIG. 19, it is considered that the quantitative ratio between samarium and oxygen in the sintered structure is not the ratio of oxides.

From this fact, it was possible to assume that a part of the oxide of the rare earth metal element was reduced by the contact with aluminum during sintering, and an alloy of aluminum and the rare earth metal element was formed, whereby the melting point decreased due to eutectic crystals and the rare earth metal element functioned as a sintering aid that produced the liquid phase. Therefore, it is possible to assume that even when the additive particle of the rare earth metal is not a perfect oxide but has been oxidized only in a part of the surface or the like, obviously, the same effect can be generated, and the same effect can also be obtained from, aside from the oxide of the rare earth metal element, a fluoride of the rare earth metal element, a chloride of the rare earth metal element, or a composite oxide of the rare earth metal element and aluminum.

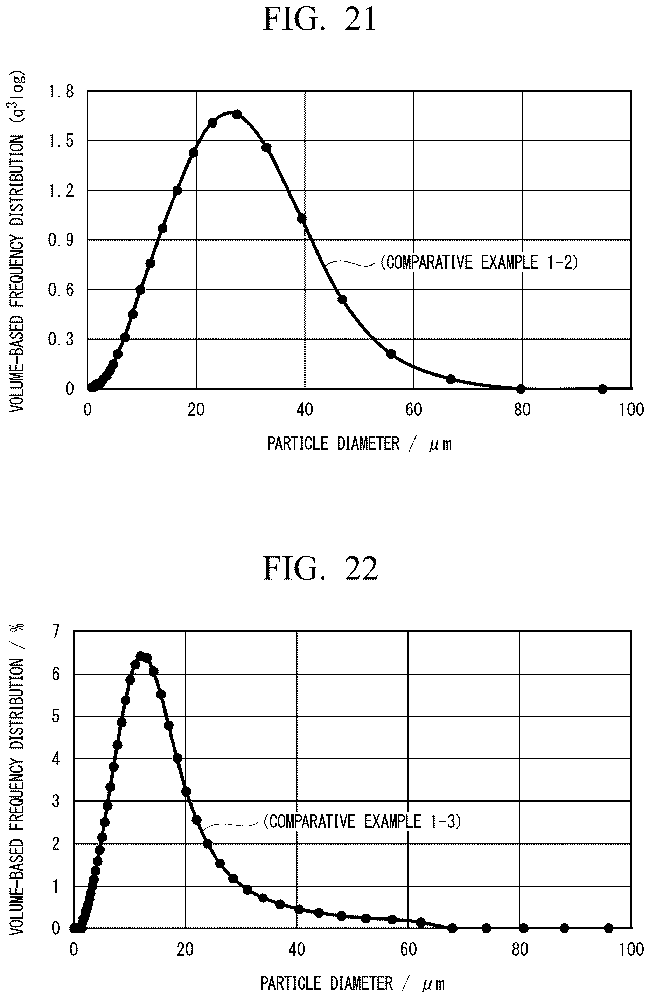

FIG. 20 shows the particle size distribution of the aluminum powder (D₅₀: 29.8 µm) used in Comparative Example 1-1, FIG. 21 shows the particle size distribution of the aluminum powder (D₅₀: 21.3 µm) used in Comparative Example 1-2, and FIG. 22 shows the particle size distribution of the aluminum powder (D₅₀: 10.3 µm) used in Comparative Example 1-3.

Sintered bodies was produced under the same sintering conditions as in Comparative Example 1-1 using the aluminum powder of Comparative Example 1-3, the powder for sintering of Comparative Example 4-3 obtained by adding dysprosium oxide to the aluminum powder of Comparative Example 1-3 as much as the amount of dysprosium reached 2.3 mass%, and the powder for sintering of Comparative Example 4-5 obtained by adding dysprosium oxide to the aluminum powder of Comparative Example 1-3 as much as the amount of dysprosium reached 3.2 mass%, respectively.

As a result, the sintered density of the sintered body obtained using the powder for sintering of Comparative Example 1-3 was 61.4%, the sintered density of the sintered body obtained using the powder for sintering of Comparative Example 4-3 was 70.3%, and the sintered density of the sintered body obtained using the powder for sintering of Comparative Example 4-5 was 69.7%.

This fact indicates that in a case where an aluminum powder having a small average particle diameter is used as a main powder, a favorable sintered density cannot be obtained even when the aluminum powder contains a rare earth metal element.

From this fact, it was found that when the median diameter (D₅₀) of the aluminum powder used as the main powder is smaller than 20 µm, the flowability deteriorates, and consequently, a favorable sintered density cannot be obtained.

As shown in Table 1, for all of the samples obtained by adding any of the oxide particles of praseodymium, the oxide particles of samarium, the oxide particles of gadolinium, the oxide particles of dysprosium, and the oxide particles of ytterbium to a pure aluminum powder, results of a high sintered density and an appropriate amount of a liquid phase were obtained.

### REFERENCE SIGNS LIST

1 (Particle of) powder for sintering
2 (Particle of) main powder
3 Additive particle

## Claims

1. A powder for sintering comprising:
a main powder composed of aluminum or an aluminum alloy; and
an oxide of one or more rare earth metal elements selected from scandium, yttrium, and lanthanoid elements,
wherein a content of the oxide of the rare earth metal element in a total mass in the powder for sintering is 0.02 mass% or more and 1.5 mass% or less.

2. The powder for sintering according to Claim 1,
wherein the oxide of the rare earth metal element is present on a surface of a particle of the main powder.

3. A powder for sintering comprising:
a mixed powder having a particle of a main powder composed of aluminum or an aluminum alloy and
an additive particle composed of an oxide of one or more rare earth metal elements selected from scandium, yttrium, and lanthanoid elements,
wherein a content of the oxide of the rare earth metal element in a total mass of the mixed powder is 0.02 mass% or more and 1.5 mass% or less, and
at least a part of the additive particle adheres to a surface of the particle of the main powder.

4. The powder for sintering according to any one of Claims 1 to 3,
wherein the rare earth metal element is one or more selected from the group consisting of praseodymium, neodymium, samarium, europium, gadolinium, terbium, dysprosium, holmium, erbium, thulium, ytterbium, and lutetium.

5. The powder for sintering according to Claim 3,
wherein a particle diameter of the additive particle is smaller than a particle diameter of the main powder.

6. The powder for sintering according to Claim 1 or 2,
wherein a volume-based 50% cumulative average particle diameter (median diameter D₅₀) of a particle of the powder for sintering measured by a laser diffraction and scattering method is 20 µm or more and 65 µm or less.

7. The powder for sintering according to Claim 3,
wherein a volume-based 50% cumulative average particle diameter (median diameter D₅₀) of a particle of the powder for sintering measured by a laser diffraction and scattering method is 20 µm or more and 65 µm or less.

8. The powder for sintering according to Claim 4,
wherein a volume-based 50% cumulative average particle diameter (median diameter D₅₀) of a particle of the powder for sintering measured by a laser diffraction and scattering method is 20 µm or more and 65 µm or less.

9. The powder for sintering according to Claim 5,
wherein a volume-based 50% cumulative average particle diameter (median diameter D₅₀) of a particle of the powder for sintering measured by a laser diffraction and scattering method is 20 µm or more and 65 µm or less.
